(19) **Europäisches Patentamt / European Patent Office / Office européen des brevets**

(11) **EP 2 053 771 B1**

(12) **EUROPEAN PATENT SPECIFICATION**

(45) Date of publication and mention
of the grant of the patent:
**14.04.2010 Bulletin 2010/15**

(51) Int Cl.:
*H04J 14/02* (2006.01)   *H04B 10/17* (2006.01)
*H04B 10/08* (2006.01)

(21) Application number: **07291299.1**

(22) Date of filing: **26.10.2007**

(54) **Method for optimizing optical amplification in an optical network**

Verfahren zur Optimierung der optischen Verstärkung in einem optischen Netzwerk

Procédé d'optimisation de l'amplification optique dans un réseau optique

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**29.04.2009 Bulletin 2009/18**

(73) Proprietor: **Alcatel Lucent**
**75008 Paris (FR)**

(72) Inventors:
• **Zami, Thierry**
**91300 Massy (FR)**

• **Borne, Sophie**
**91590 La Ferte Alais (FR)**

(74) Representative: **Croonenbroek, Thomas Jakob**
**INNOVINCIA**
**11, Avenue des Tilleuls**
**74200 Thonon-les-Bains (FR)**

(56) References cited:
**EP-A- 0 926 854   DE-A1- 10 113 303**
**DE-A1- 10 120 276   US-B1- 6 701 089**

## Description

## BACKGROUND OF THE INVENTION

The present invention relates to the field of channel power management in optical communication networks.

Optical communication networks mainly consist of nodes connected together via optical links. A node is in general connected to one or several other nodes and several paths usually exist to go from one node to another. Thus, a method for routing is needed to route the different signals from their source node to their destination node.

Nowadays, wavelength division multiplexing (WDM) is used in order to increase optical networks capacity. Wavelength division multiplexing technology consists in the multiplexing of different channels corresponding to different wavelengths into one multiplexed signal transmitted along an optical link.

In WDM networks, nodes can be equipped with Optical-Electronic-Optical (OEO) devices able to perform regeneration and conversion of the signal. Regeneration ensures a minimum transmission signal quality level. Regeneration is needed due to the degradation of the signal during optical transmission. However, the presence of regenerators affects the cost of the network in proportion of the WDM channels.

Between two OEO devices of the network, the optical signal is transmitted through different links in a "transparent" way. Such links include optical fibers as well as optical amplifiers to cope with the signal attenuation. However the output power in these amplifiers is limited and the channel output power management needs to be optimized.

To achieve such optimization, methods in the state of the art use automatic pre-emphasis adjustment (APA) devices where the distribution of the level of output power is achieved at the source node in function of a quality feedback from the destination node.

The present invention offers an improved method to optimize the management of the channel output power in an optical networks.

Documents DE 10 113 303, DE 10 120 276, US 6 701 089 and EP 0 926 854 show some relevant prior art.

## SUMMARY OF THE INVENTION

One object of the present invention is to optimize the management of optical amplification in the "transparent" parts of an optical network. The present invention offers a better optimization of the level of output power allowing improving performances of the optical signal transmission.

This optimization of the optical amplification is achieved by a method for optimizing optical amplification in an optical network, said network comprising a plurality of nodes connected by means of optical links, said links comprising a plurality of channels with associated wavelengths, at least one optical amplifier with a predefined maximum level of output power. The method comprises steps of selecting a transparent path with a corresponding channel between a source network node and a destination network node, determining the level of available output power in the amplifiers of the links along the selected transparent path. It further comprises steps of setting the level of output power of said selected channel in said links along the selected transparent path at a preselected level of output power, estimating the signal transmission quality of the signal transmitted along the selected transparent path at destination network node and, for said links along the selected path, re-adjusting the level of output power of the selected channel in function of the estimated signal transmission quality and the available level of output power of the amplifiers of said links.

Preferably, it also comprises the steps of determining, for each said optical amplifiers of the links along the selected transparent path, an amplifier power margin, said amplifier power margin being the ratio of the average available level of output power per channel to the theoretical average output power per channel.

Advantageously, it also comprises the step of determining, for each said link along the selected transparent path, a link power margin, said link power margin being the minimum of the amplifier power margins of said link.

Alternatively, setting the level of output power of said selected channel in said links at a preselected level of output power comprises setting the level of output power of said selected channel in said links at a value so that the output power of the selected channel at the amplifier with the smallest margin corresponds to the average available output power per channel of said amplifier.

Preferably, the quality of transmission is estimated by a QoT function based on the optical signal to noise ratio (OSNR) and the nonlinear phase induced.

Advantageously, estimating the signal transmission quality of the signal transmitted along the selected transparent path at destination network node comprises estimating, from a QoT function, a Q factor at destination node and comparing this Q factor to a reference Q factor.

Furthermore, for re-adjusting the amplification power of the selected channel in function of the estimated signal transmission quality and the available level of output power, the output power of the selected channel in the link with the smallest margin is decreased if the Q factor obtained from the QoT function corresponds to a better quality than the quality corresponding to the reference Q factor.

Alternatively, for re-adjusting the output power of the selected channel in function of the estimated signal transmission quality and the available level of output power, the output power of the selected channel in the link with the highest margin is increased if the Q factor obtained from the QoT function corresponds to a quality worse than the quality corresponding to the reference Q factor.

Preferably, adjustment of the level of output power of the channels is accomplished on several links of the path until a sufficient quality of signal is obtained or until the power margins of all links along the selected transparent path are equal to or lower than a predefined threshold.

Advantageously, adjustment of the level of output power of the channels is limited to a predetermined range.

Furthermore, if the Q factor obtained after readjustment of the output power of the selected channel in said links is still worse than the reference, a regeneration is performed at a previous node of the path and the method is applied on the remaining transparent portion of the selected path.

## BRIEF DESCRIPTION OF THE DRAWINGS

FIG. 1 is a diagram of an optical link;
FIG.2 is a diagram of an optical network;

## DETAILED DESCRIPTION OF THE INVENTION

As used herein, the term "QoT" stands for quality of transmission and the QoT function gives an estimation of the quality of the transmitted signal. Different types of parameters can be taken into account by the QoT function, for example optical signal to noise ratio or bit error rate.

As used herein, the term "link" refers to a set of successive transmitting network elements (optical fibers, optical amplifiers) located between two optical network elements that exhibit a channel power equalizing feature.

As used herein, the terms "transparent path" or "transparent network" refer to path or network where signals are transmitted in the optical/photonic domain without conversion to electronic.

The present method can be used in a simulation tool to dimension a network from a green-field as well as in a control plane driving in a real optical network.

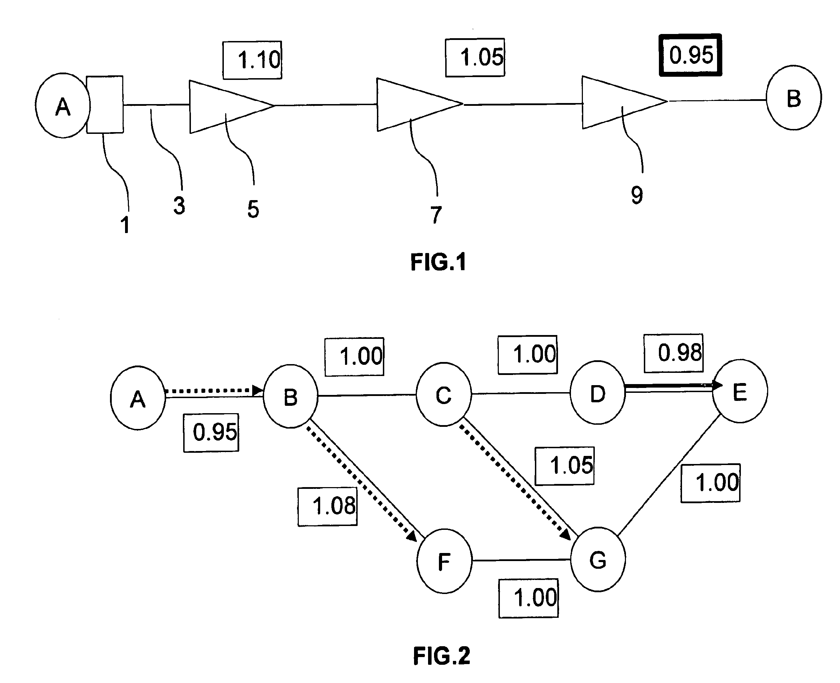

Fig. 1 illustrates the conception of an optical link between two optical nodes A and B. At the source of the link, a channel power equalizer 1 (CPE) tunes the power level of signal of the different channels. At the output of the CPE, the signal is transmitted through an optical fiber 3. In order to avoid signal degradation due to signal losses accumulated along the optical fiber 3, optical amplifiers (5,7,9) are disposed along the link. Each amplifier has a limited level of output power. Amplification is made on the complete signal. For each optical amplifier of a link, three in the present example, an average available level of output power ($P_{AC}$) can be determined.
The average available output power ($P_{AC}$) is defined as

$$P_{AC} = \frac{(P_M - P_U)}{(N_M - N_U)}$$

where $P_M$ is the maximum level of output power of the amplifier in normal operating mode, $P_U$ is the level of output power currently used by the amplifier, $N_M$ is the maximum number of channels the amplifier can amplify and $N_U$ the number of channels currently used.
From this average available output power ($P_{AC}$), an amplifier margin $M_A$ can be deduced by

$$M_A = \frac{P_{AC}}{\left( \dfrac{P_M}{N_M} \right)}$$

where $\dfrac{P_M}{N_M}$ is the theoretical average output power.
In the present example, for the link AB, this would result in three different amplifier margins. These margins are the values associated with each amplifier on Fig. 1. From these values, a link margin $M_L$ can be derived. The link margin is defined as the minimum of the amplifier margins established for all the optical amplifiers of the link. In the present case, this margin is 0.95 and corresponds to the margin of the amplifier 9. This link margin determination can be done on all the links of the network.

Fig.2 illustrates an optical network comprising several links. The different steps of the present method will be shown based on this optical network. In this network, two wavelengths exist λ1 and λ2. The arrows on the diagram indicate channels already occupied meaning not available in case of a connection request along the path, continuous arrow corresponds to wavelength λ1 and dotted arrows correspond to wavelength λ2. The numbers associated with each link represent the output power margin of the link. The determination of these link margins has been achieved as described above.

The present method can be divided into four main steps:

- <u>a routing step</u>

During this step, a search for optimal transparent paths to go from a source network node to a destination network node is achieved. In the present example a request from network node A to network node E is launched. Transparency means that a wavelength continuity along the path has to be achieved on at least one channel. In the present example, the channel corresponding to the wavelength λ2 is not available between network node A and network node B so that no transparent path using wavelength λ2 can be found between network node A and network node E. With the channel corresponding to wavelength λ1 a transparent path can be found from network node A to network node D but not from network node D to network node E. The only two available transparent paths from network node A to network node E are ABCGE on the channel corresponding to wavelength λ1 and ABFGE on the same channel. These two paths will be tested in the next step. A selection between the different possible transparent paths can also be made to select the optimal ones. This selection can be made on different criteria such as the length of the path.

- a power determination step

In this step, the average available level of output power of each amplifier in each link of the path are determined and the power margin of each link is deduced. If the margin of a link is smaller than 1, the link is already over-consuming its potential optical amplification power. If this margin is higher than 1, extra optical power is available to improve the performance of new potential connections.

- a power setting step

In this step, each link of the selected path, ABCGE in the present case, tunes the power of the selected channel so that its power at the output of the amplifier with the smallest margin corresponds to the average available level of output power ($P_{AC}$) of said amplifier. This corresponds to the value of the average available output power per channel that was computed before the selected channel was turned on. Tuning is achieved thanks to the channel power equalizer at the input of the link.

- an adjusting step

The quality of the signal at destination node (E) is then estimated with the optical signal to noise ratio (OSNR) and the non-linear phase induced by the chosen powers. This process estimates a Q factor at destination node ($Q_0$). This factor is compared to a reference Q factor ($Q_{REF}$). A better Q factor corresponds to a better quality of the transmitted signal. If $Q_0$ is better than $Q_{REF}$, the connection is feasible but $Q_0$ -$Q_{REF}$ is an extra margin which is not necessary for the connection and could be useful for future connections.
To save the output power corresponding to this extra margin, the level of output power of the selected channel in the link with the smallest margin is decreased to adjust the value of the estimated Q factor at destination node to the reference value. In the present example, the link with the smallest margin is AB. This allows increasing the margin of the said link and therefore save output power for future potential connections. If during adjustment, the margin of the link AB becomes higher than the margin of the other links of the paths while the Q factor at destination node is still too high, adjustment is then applied on the other links in order to always adjust the link with the current smallest margin.

On the other hand, if $Q_0$ is worse than $Q_{REF}$, the connection cannot be established. The output power in the link with the highest margin, the link between node C and node G in the present case, is increased in order to increase the value of the Q factor at destination node and make the connection possible. If after adjustment of the level of output power of the signal in the link between node C and node G, the Q factor is still too low, adjustment is performed on links BC and GE and then AB until the required Q factor is reached. These power adjustments have to be kept within a predetermined range not to induce strong power unbalances between the different channels in the network. The margin of a link can be kept higher than a predetermined threshold, for example 0.9. If, after adjustments, the Q factor is still worse than the reference, the connection cannot be achieved transparently and a regeneration has to be performed along the path, for example, a regeneration could be made in B,C or G if regeneration is possible or another path has to be found. If a regeneration is performed at a previous node, the method is applied again between the source network node (A) and the node where the regeneration is achieved (B,C or G).

Thus, the present invention optimizes the distribution of output power by adjusting the level of output power of a given channel in function of the quality of transmission at the most appropriate link of the path. This adjustment optimizes the transmission capacities of the network and increases its performances. Moreover, the present method allows to decrease the number of regenerators needed in the network and therefore the cost of the network.

**Claims**

1. Method for optimizing optical amplification in an optical network, said network comprising a plurality of nodes connected by means of optical links, said links comprising

   - a plurality of channels with associated wavelengths,
   - at least one optical amplifier (5,7,9) with a predefined maximum level of output power,

   wherein the method comprises steps of :

   - selecting a transparent path with a corresponding channel between a source network node (A) and a destination network node (E),
   - determining the level of available output power in the amplifiers of the links along the selected transparent path,
- setting the level of output power of said selected channel in said links along the

selected transparent path at a preselected level of output power, **characterised by**

- estimating a signal transmission quality of a signal transmitted along the selected transparent path at the destination network node (E), said estimating comprising estimating, from a QoT function, a Q factor at the destination node (E) and comparing this Q factor to a reference Q factor,
- determining, for each said optical amplifiers of the links along the selected transparent path, an amplifier power margin, said amplifier power margin being the ratio of the average available level of output power per channel to the theoretical average output power per channel,
- determining, for each said link along the selected transparent path, a link power margin, said link power margin being the minimum of the amplifier power margins of said link,
- for said links along the selected path, re-adjusting the level of output power of the selected channel in function of the estimated signal transmission quality and the available level of output power of the amplifiers of said links such that:

- if the Q factor obtained from the QoT function corresponds to a better quality than the quality corresponding to the reference Q factor, the output power of the selected channel in the link with the smallest margin is decreased
- if the Q factor obtained from the QoT function corresponds to a quality worse than the quality corresponding to the reference Q factor, the output power of the selected channel in the link with the highest margin is increased.

2. Method for optimizing optical amplification in an optical network in accordance with claim 1, wherein setting the level of output power of said selected channel in said links at a preselected level of output power comprises setting the level of output power of said selected channel in said links at a value so that the output power of the selected channel at the amplifier with the smallest margin corresponds to the average available output power per channel of said amplifier.

3. Method for optimizing optical amplification in an optical network in accordance with one of the previous claims, wherein the quality of transmission is estimated by a QoT function based on the optical signal to noise ratio (OSNR) and the nonlinear phase induced.

4. Method for optimizing optical amplification in an optical network in accordance with one of the previous claims, wherein adjustment of the level of output power of the channels is accomplished on several links of the path until a sufficient quality of signal is obtained or until the power margins of all links along the selected transparent path are equal to or lower than a predefined threshold.

5. Method for optimizing optical amplification in an optical network in accordance with one of the previous claim, wherein adjustment of the level of output power of the channels is limited to a predetermined range.

6. Method for optimizing optical amplification in an optical network in accordance with claim 5, wherein if the Q factor obtained after re-adjustment of the output power of the selected channel in said links is still worse than the reference, a regeneration is performed at a previous node of the path and the method is applied on the remaining transparent portion of the selected path.

**Patentansprüche**

1. Verfahren zur Optimierung der optischen Verstärkung in einem optischen Netzwerk, wobei das besagte Netzwerk eine Vielzahl von anhand von optischen Links verbundenen Knoten umfasst, wobei die besagten Links umfassen:

- Eine Vielzahl von Kanälen mit zugeordneten Wellenlängen,
- mindestens einen optischen Verstärker (5, 7, 9) mit einem vorgegebenen maximalen Ausgangsleistungspegel,

wobei das Verfahren die folgenden Schritte umfasst:

- Auswählen eines transparenten Pfades mit einem entsprechenden Kanal zwischen einem Quell-Netzknoten (A) und einem Ziel-Netzknoten (E),
- Ermitteln des Pegels der verfügbaren Ausgangsleistung in den Verstärkern der Links entlang dem ausgewählten transparenten Pfad,
- Einstellen des Pegels der Ausgangsleistung des besagten ausgewählten Kanals in den besagten Links entlang dem ausgewählten transparenten Pfad auf einen vorgegebenen Ausgangsleistungspegel,

**gekennzeichnet durch**

- das Schätzen einer Signalübertragungsqualität eines entlang dem ausgewählten transparenten Pfad übertragenen Signals am Ziel-Netzknoten (E), wobei das besagte Schätzen das Schätzen, aus einer QoT-Funktion, eines Q-Faktors am Zielknoten (E), und das Vergleichen dieses Q-Faktors mit einem Bezugs-Q-Faktor umfasst,
- das Ermitteln, für einen jeden der besagten optischen Verstärker der Links entlang dem ausgewählten transparenten Pfad, einer Verstärker-Leistungsreserve, wobei die besagte Verstärker-Leistungsreserve das Verhältnis des durchschnittlichen verfügbaren Pegels der Ausgangsleistung pro Kanal zu der durchschnittlichen theoretischen Ausgangsleistung pro Kanal ist,
- das Ermitteln, für einen jeden der besagten Links entlang dem ausgewählten transparenten Pfad, einer Link-Leistungsreserve, wobei die besagte Link-Leistungsreserve der minimale Wert der Verstärker-Leistungsreserven der besagten Links ist,
- für die besagten Links entlang dem ausgewählten Pfad, das Nachregeln des Ausgangsleistungspegels des ausgewählten Kanals gemäß der geschätzten Signalübertragungsqualität und dem verfügbaren Ausgangsleistungspegel der Verstärker der besagten Links, so dass:

- Wenn der aus der QoT-Funktion erhaltene Q-Faktor einer besseren Qualität als die dem Bezugs-Q-Faktor entsprechende Qualität entspricht, die Ausgangsleistung des ausgewählten Kanals in dem Link mit der kleinsten Reserve gesenkt wird,
- Wenn der aus der QoT-Funktion erhaltene Q-Faktor einer schlechteren Qualität als die dem Bezugs-Q-Faktor entsprechende Qualität entspricht, die Ausgangsleistung des ausgewählten Kanals in dem Link mit der höchsten Reserve erhöht wird.

2. Verfahren zur Optimierung der optischen Verstärkung in einem optischen Netzwerk nach Anspruch 1, wobei das Einstellen des Ausgangsleistungspegels des besagten ausgewählten Kanals in den besagten Links auf einen vorgegebenen Ausgangsleistungspegel das Einstellen des Ausgangsleistungspegels des besagten ausgewählten Kanals in den besagten Links auf einen solchen Wert umfasst, dass die Ausgangsleistung des ausgewählten Kanals am Verstärker mit der kleinsten Reserve der durchschnittlichen verfügbaren Ausgangsleistung pro Kanal des besagten Verstärkers entspricht.

3. Verfahren zur Optimierung der optischen Verstärkung in einem optischen Netzwerk nach einem der vorstehenden Ansprüche, wobei die Übertragungsqualität von einer QoT-Funktion auf der Basis des optischen Signal-Rausch-Abstands (OSNR) und der induzierten nicht-linearen Phase geschätzt wird.

4. Verfahren zur Optimierung der optischen Verstärkung in einem optischen Netzwerk nach einem der vorstehenden Ansprüche, wobei das Einstellen des Ausgangsleistungspegels der Kanäle auf mehreren Links des Pfades erfolgt, bis eine ausreichende Signalqualität erhalten wird, oder bis die Leistungsreserven aller Links entlang dem ausgewählten transparenten Pfad gleich einem vorgegebenen Grenzwert oder niedriger als ein vorgegebener Grenzwert sind.

5. Verfahren zur Optimierung der optischen Verstärkung in einem optischen Netzwerk nach einem der vorstehenden Ansprüche, wobei das Einstellen der Ausgangsleistung der Kanäle auf einen vorbestimmten Bereich begrenzt ist.

6. Verfahren zur Optimierung der optischen Verstärkung in einem optischen Netzwerk nach einem der vorstehenden Ansprüche, wobei, wenn der nach dem Nachregeln der Ausgangsleistung des ausgewählten Kanals in den besagten Links erhaltene Q-Faktor noch immer schlechter als der Bezugswert ist, eine Regeneration an einem vorherigen Knoten des Pfades durchgeführt und das Verfahren auf dem restlichen transparenten Abschnitt des ausgewählten Pfades angewendet wird.

**Revendications**

1. Procédé d'optimisation de l'amplification optique dans un réseau optique, ledit réseau comprenant une pluralité de noeuds connectés au moyen de liaisons optiques, lesdites liaisons comprenant:

- une pluralité de voies ayant des longueurs d'onde associées,
- au moins un amplificateur optique (5, 7, 9) ayant un niveau maximum prédéfini de puissance de sortie,

dans lequel le procédé comprend les étapes suivantes :

- sélection d'un chemin transparent avec une voie correspondante entre un noeud de réseau source (A) et un noeud de réseau de destination (E),
- détermination du niveau de puissance de sortie disponible dans les amplificateurs des liaisons le long du chemin transparent sélectionné,
- réglage du niveau de puissance de sortie de ladite voie sélectionnée dans lesdites liaisons le long du chemin transparent sélectionné à un niveau présélectionné de puissance de sortie,

**caractérisé par** :

- l'estimation d'une qualité de transmission de signal d'un signal transmis le long du chemin transparent sélectionné au niveau du noeud de réseau de destination (E), ladite estimation comprenant l'estimation, à partir d'une fonction QoT, d'un facteur Q au niveau du noeud de destination (E) et la comparaison de ce facteur Q à un facteur Q de référence,
- la détermination, pour chacun desdits amplificateurs optiques des liaisons le long du chemin transparent sélectionné, d'une marge de puissance d'amplification, ladite marge de puissance d'amplification étant le rapport du niveau moyen disponible de puissance de sortie par voie sur la puissance de sortie moyenne théorique par voie,
- la détermination, pour chacune desdites liaisons le long du chemin transparent sélectionné, d'une marge de puissance de liaison, ladite marge de puissance de liaison étant le minimum des marges de puissance d'amplification de ladite liaison,
- pour lesdites liaisons le long du chemin sélectionné, le réajustement du niveau de puissance de sortie de la voie sélectionnée en fonction de la qualité estimée de transmission du signal et du niveau disponible de puissance de sortie des amplificateurs desdites liaisons, de telle sorte que :

- si le facteur Q obtenu à partir de la fonction QoT correspond à une meilleure qualité que la qualité correspondant au facteur Q de référence, la puissance de sortie de la voie sélectionnée dans la liaison ayant la plus petite marge est diminuée,
- si le facteur Q obtenu à partir de la fonction QoT correspond à une qualité inférieure à la qualité correspondant au facteur Q de référence, la puissance de sortie de la voie sélectionnée dans la liaison ayant la plus grande marge est augmentée.

2. Procédé d'optimisation de l'amplification optique dans un réseau optique selon la revendication 1, dans lequel le réglage du niveau de puissance de sortie de ladite voie sélectionnée dans lesdites liaisons à un niveau présélectionné de puissance de sortie comprend le réglage du niveau de puissance de sortie de ladite voie sélectionnée dans lesdites liaisons à une valeur telle que la puissance de sortie de la voie sélectionnée sur l'amplificateur ayant la plus petite marge correspond à la puissance de sortie disponible moyenne par voie dudit amplificateur.

3. Procédé d'optimisation de l'amplification optique dans un réseau optique selon l'une des revendications précédentes, dans lequel la qualité de transmission est estimée par une fonction QoT sur la base du rapport signal sur bruit optique (OSNR) et de la phase non linéaire induite.

4. Procédé d'optimisation de l'amplification optique dans un réseau optique selon l'une des revendications précédentes, dans lequel le réglage du niveau de puissance de sortie des voies est accompli sur plusieurs liaisons du chemin jusqu'à ce qu'une qualité de signal suffisante soit obtenue ou jusqu'à ce que les marges de puissance de toutes les liaisons le long du chemin transparent sélectionné soient égales ou inférieures à un seuil prédéfini.

5. Procédé d'optimisation de l'amplification optique dans un réseau optique selon l'une des revendications précédentes, dans lequel le réglage du niveau de puissance de sortie des voies est limité à une plage prédéterminée.

6. Procédé d'optimisation de l'amplification optique dans un réseau optique selon la revendication 5, dans lequel si le facteur Q obtenu après le réajustement de la puissance de sortie de la voie sélectionnée dans lesdites liaisons est toujours moins bon que la référence, une régénération est effectuée sur un noeud précédent du chemin et le procédé est appliqué sur la portion transparente restante du chemin sélectionné.

1.10    1.05    0.95

A    B

1    3    5    7    9

**FIG.1**

1.00    1.00    0.98

A    B    C    D    E

0.95

1.05    1.00

1.08

F    G

1.00

**FIG.2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10113303
- DE 10120276
- US 6701089 B
- EP 0926854 A